(19) Europäisches Patentamt
European Patent Office
Office européen des brevets

(11) Veröffentlichungsnummer: **0 515 856 A1**

(12) **EUROPÄISCHE PATENTANMELDUNG**

(21) Anmeldenummer: **92107264.1**

(51) Int. Cl.$^5$: **A01N 43/42**

(22) Anmeldetag: **29.04.92**

(30) Priorität: **25.05.91 DE 4117080**

(43) Veröffentlichungstag der Anmeldung:
**02.12.92 Patentblatt 92/49**

(84) Benannte Vertragsstaaten:
**AT BE CH DE DK ES FR GB GR IT LI NL PT SE**

(71) Anmelder: **BASF Aktiengesellschaft**
**Carl-Bosch-Strasse 38**
**W-6700 Ludwigshafen(DE)**

(72) Erfinder: **Bringmann, Gerhard, Prof. Dr.**
**Gertrud-von-le-Fort-Strasse 412**
**W-8700 Würzburg(DE)**
Erfinder: **Rübenacker, Martin**
**Herrenweg 40**
**W-8706 Hoechberg(DE)**
Erfinder: **Ammermann, Eberhard, Dr.**
**Sachsenstrasse 3**
**W-6700 Ludwigshafen(DE)**
Erfinder: **Lorenz, Gisela, Dr.**
**Erlenweg 13**
**W-6730 Neustadt(DE)**
Erfinder: **Ake Assi, Laurent, Prof.**
**08 BP 172**
**Abidjan 08(GA)**

(54) **Anwendung von Dioncophyllinen als Fungizide.**

(57) Verfahren zur Bekämpfung von Pilzen mit den Dioncophyllinen A oder B.

EP 0 515 856 A1

Die vorliegende Erfindung betrifft die Anwendung von Dioncophyllinen, insbesondere von Dioncophyllin A und Dioncophyllin B, als Fungizide, insbesondere als Fungizide für die Landwirtschaft, d.h. zur Bekämpfung von pflanzenpathogenen Pilzen.

Dioncophyllin A hat folgende Strukturformel

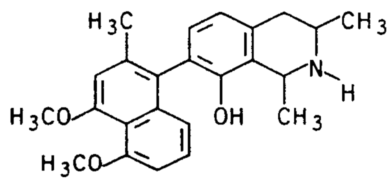

Dioncophyllin B hat folgende Strukturformel

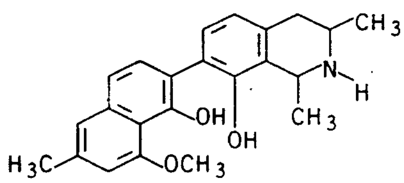

Die Verbindungen sind bekannt aus der Zeitschrift Planta Med. 56 (1990), Seiten 495 und 496.

Dioncophyllin A hat die folgenden physiko-chemischen Werte:
Schmelzpunkt: 214 ° C; $[\alpha]_D^{20}$ -14.9 (c = 0.45; $CHCl_3$).

Dioncophyllin B hat die folgenden physiko-chemischen Werte:
$[\alpha]_D^{20}$ -37.6 ° ($CHCl_3$; c 0.37). IR $\nu_{max}$ $cm^{-1}$: 3375, 3280 (O-H), 2950, 2920 (C-H).

Es wurde gefunden, daß die beiden genannten Dioncophylline, insbesondere Dioncophyllin B, eine gute fungizide Wirkung haben. Die Wirkung zeigt sich insbesondere gegenüber pflanzenpathogenen Pilzen.

Solche Pilze sind beispielsweise

| Pilz | befallene Pflanze | Deutscher Name der Pflanzenkrankheit |
|---|---|---|
| Alternaria solani | Kartoffel, Tomate | Dörrfleckenkrankheit |
| Botrytis cinerea | Erdbeere, Weintraube | Grauschimmelfäule |
| Erysiphe cichoracearum | Gurke | Gurkenmehltau |
| Erysiphe graminis | Getreide | Getreidemehltau |
| Fusarium culmorum | Hirse | Blattfleckenkrankheit |
| Leptosphaeria nodorum | Weizen | Spelzenbräune |
| Mycosphaerella arachidicola | Erdnuß | Blattfleckenkrankheit |
| Plasmopara viticola | Rebe | Perenosporakranheit der Pflanzen |
| Puccinia recondita | Weizen | Weizenbraunrost |
| Pyricularia oryzae | Reis | Reisbräune |
| Pyrenophora teres | Gerste | Netzfleckenkrankheit |
| Pseudocercosporella herpotrichoides | Weizen, Gerste | Halmbruchkrankheit |

Die obengenannten Verbindungen eignen sich als Fungizide.

Die diese Verbindungen enthaltenden Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungformen richten sich nach den Verwendungszwecken; sie sollten in jedem Fall möglichst die feinste Verteilung der Wirkstoffe gewährleisten.

Normalerweise werden die Pflanzen mit den Wirkstoffen besprüht oder bestäubt oder die Samen der Pflanzen mit den Wirkstoffen behandelt.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (Z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Wirkstoffe zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Verbindungen werden angewendet, indem man die Pilze oder die vor Pilzbefall zu schützenden Saatgüter, Pflanzen, Materialien oder den Erdboden mit einer fungizid wirksamen Menge der Wirkstoffe behandelt.

Die Anwendung erfolgt vor oder nach der Infektion der Materialien, Pflanzen oder Samen durch die Pilze.

Speziell eignen sich die Verbindungen I zur Bekämpfung folgender Pflanzenkrankheiten:
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Cercospora arachidicola an Erdnüssen,
Phytophthora infestans an Kartoffeln und Tomaten,
Fusarium- und Verticillium-Arten an verschiedenen Pflanzen,
Alternaria-Arten an Gemüse und Obst.

Die Verbindungen können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.% Wirkstoff.

Die Aufwandmengen liegen je nach Art des gewünschten Effektes zwischen 0,02 und 3 kg Wirkstoff pro ha.

Bei der Saatgutbehandlung werden im allgemeinen Wirkstoffmengen von 0,001 bis 50 g, vorzugsweise

0,01 bis 10 g je Kilogramm Saatgut benötigt.

Die fungiziden Mittel können in der Anwendungsform als Fungizide auch zusammen mit anderen Wirkstoffen vorliegen, der z.B. mit Herbiziden, Insektiziden, Wachstumsregulatoren, Fungiziden oder auch mit Düngemitteln.

Beim Vermischen mit Fungiziden erhält man dabei in vielen Fällen eine Vergrößerung des fungiziden Wirkungsspektrums.

Anwendungsbeispiel 1

Wirksamkeit gegen Botrytis cinerea

Paprikasämlinge der Sorte "Neusiedler Ideal Elite" wurden, nachdem sich 4 bis 5 Blätter gut entwickelt hatten, mit wäßrigen Suspensionen, die 80 % Wirkstoff und 20 % Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 bis 24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedecken.

Bewertung:

0 = kein Pilzbefall, abgestuft bis
5 = Totalbefall

| Wirkstoff-Nr. | Befall der Blätter nach Applikation von 0,05 %iger wäßriger Wirkstoffaufbereitung % Befall |
|---|---|
| Dioncophyllin B bekannte Vergleichssubstanz | 0 |
| N-Trichlormethylthiotetrahydrophthalimid | 20 |
| Unbehandelt | 65 |

Anwendungsbeispiel 2

Wirksamkeit gegen Plasmopara viticola

Blätter von Topfreben der Sorte "Müller Thurgau" wurden mit wäßriger Spritzbrühe, die 80 % Wirkstoff und 20 % Emulgiermittel in der Trockensubstanz enthielt, besprüht. Um die Wirkungsdauer der Wirkstoffe beurteilen zu können, wurden die Pflanzen nach dem Antrocknen des Spritzbelages 8 Tage im Gewächshaus aufgestellt. Erst dann wurden die Blätter mit einer Zoosporenaufschwemmung von Plasmopara viticola (Rebenperonospora) infiziert. Danach wurden die Reben zunächst für 48 Stunden in einer wasserdampfgesättigten Kamnmer bei 24°C und anschließend für 5 Tage in einem Gewächshaus bei Temperaturen zwischen 20 und 30°C aufgestellt. Nach dieser Zeit wurden die Pflanzen zur Beschleunigung des Sporangienträgerausbruchs abermals für 16 Stunden in der feuchten Kammer aufgestellt. Dann erfolgte die Beurteilung des Ausmaßes des Pilzausbruchs auf den Blattunterseiten.

Bewertung:

0 = kein Pilzbefall, abgestuft bis
5 = Totalbefall

| Wirkstoff-Nr. | Befall der Blätter nach Applikation von 250 ppm-haltiger wäßriger Wirkstoffaufbereitung % Befall |
|---|---|
| Dioncophyllin B | 5 |
| Unbehandelt | 70 |

## Patentansprüche

1. Verfahren zur Bekämpfung von Pilzen, dadurch gekennzeichnet, daß man die Pilze oder die vom Pilzbefall bedrohten Pflanzen, Saatgüter, Gegenstände oder den Erdboden mit einer fungizid wirksamen Menge der Verbindung Dioncophyllin A oder Dioncophyllin B oder deren Mischung behandelt.

2. Verfahren nach Anspruch 1, dadurch gekennzeichnet, daß man Dioncophyllin B verwendet.

Europäisches Patentamt

# EUROPÄISCHER RECHERCHENBERICHT

Nummer der Anmeldung

EP 92 10 7264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | PLANTA MEDICA<br>Bd. 56, Nr. 6, 6. Dezember 1990, STUTTGART<br>Seiten 495 - 496;<br>G.BRINGMANN ET AL.: 'Isolation, Structure Elucidation, and Stereoselective Total Synthesis of Novel Alkaloids from Triphyophyllum peltatum'<br>* das ganze Dokument *<br>--- | 1,2 | A01N43/42 |
| A | THE ALKALOIDS (ACADEMIC PRESS)<br>Bd. 29, 1986, LONDON<br>Seiten 141 - 186;<br>G.BRINGMANN: 'The naphtyl isoquinoline alkaloids'<br>* Seite 155; Abbildung 23 *<br>* Seite 181; Kapitel VI *<br>----- | 1,2 | |
| | | | **RECHERCHIERTE SACHGEBIETE (Int. Cl.5 )** |
| | | | A01N |

Der vorliegende Recherchenbericht wurde für alle Patentansprüche erstellt

| Recherchenort | Abschlußdatum der Recherche | Prüfer |
|---|---|---|
| DEN HAAG | 25 AUGUST 1992 | W. Lamers |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)